# EUROPEAN PATENT APPLICATION

(11) **EP 1 380 922 A2**
(43) Date of publication of application: **14.01.2004**
(21) Application number: 03253571.8
(22) Date of filing: 05.06.2003
(51) Int. Cl.: G06F 1/16, G06F 1/32

(54) **Computer apparatus with wireless networking interface**

(30) Priority: 11.07.2002 KR 2002040495; 14.01.2003 KR 2003002484
(71) Applicant: SAMSUNG ELECTRONICS CO., LTD., Suwon-City, Kyungki-do (KR)
(72) Inventor: Han, Sun-hwa, Kuro-ku, Seoul city (KR); Kim, Kyoung-won, suji-eup, Yongin city, Kyungki-do (KR)
(74) Representative: Geary, Stuart Lloyd

(57) **Abstract**

A method of controlling a computer system having an antenna capable of being drawn out and in, with which an automatic wireless network connection/disconnection can be made by drawing out/in the antenna. The present invention provides automatically wirelessly accessing and disconnecting to a computer system in one of system power states of powered, power-save and powered-off, by sensing whether the antenna is drawn out/in, and if sensed that the antenna is drawn out, converting the system into the powered state, if the system is in the state of power-save or powered-off, and executing/closing a network accessing program wirelessly accessing/disconnecting the network depending upon whether the antenna is drawn out/in, respectively.

## Description

The present invention relates to a computer apparatus including a processor, a memory storing a networking program, a wireless networking interface and an antenna movable between a stowed position and an operational position.

Recently, network adaptors have become almost indispensable features of computers. The use of wireless networking in particular has expanded greatly and wireless networking devices are commonly to be found in portable computers, personal digital assistants (PDAs), etc. Types of wireless network access modules include wireless LAN cards for network access, CDMA communication modules for mobile network access and Bluetooth modules for short-distance wireless network access.

In the case of accessing the network by means of a wireless network access module, a user can wirelessly access a network by executing software for network access. In other words, to make a connection or to access the Internet from a computer system, the user has to boot up the computer system and then execute the computer program for wirelessly accessing the Internet.

An antenna can be installed inside or outside the wireless network access module. In the case of an antenna mounted outside the module, the antenna is typically exposed on one side of the main body of the computer system, so as to allow the user to pull out the antenna when wireless network access is required.

Accordingly, to access a wireless network using a wireless network access module, the user has the inconvenience of having to execute application software for network access and pull out the antenna.

Furthermore, when disconnecting from the wireless network, the user has the further inconvenience of having to close (exit) the network access application software and push the antenna back into its storage position.

A computer apparatus according to the present invention is characterised by means for detecting the position of the antenna and outputting an antenna operational signal when the antenna is moved to said operational position and the processor being responsive to said antenna operational signal to run said networking program.

Preferably the means for detecting the position of the antenna is configured for outputting an antenna stowed signal when the antenna is moved to said stowed position and the processor being responsive to said antenna stowed signal to terminal said networking program.

The apparatus will generally include a body into which the antenna is retractable to said stowed position and, preferably, the antenna will be hingedly coupled to said body.

Preferably, the antenna is telescopic.

Preferably, the apparatus includes power management means and the power management means is responsive to said antenna operational signal to switch the apparatus into a fully on state in the event that it is not in said fully on state.

Preferably, the networking program is a user space application program.

Embodiments of the present invention will now be described, by way of example, with reference to the accompanying drawings, in which:

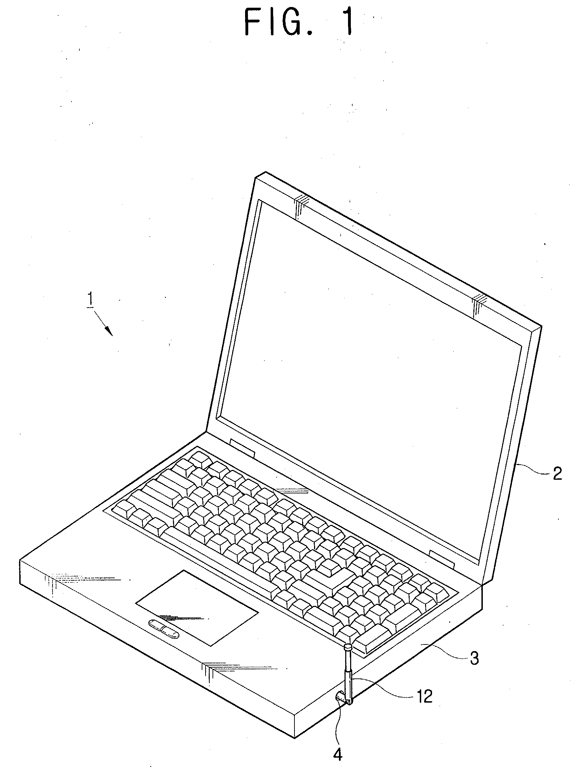

Figure 1 is a perspective view of a portable computer having a retractable antenna according to the present invention;
Figure 2 is a control block diagram of the computer shown in Figure 1;
Figure 3 is a control block diagram of the wireless network accessing module shown in Figure 2;
Figure 4 is a flowchart illustrating a first manner of operation of the computer shown in Figure 1; and
Figure 5 is a flowchart illustrating a second manner of operation of the computer system shown in Figure 1.

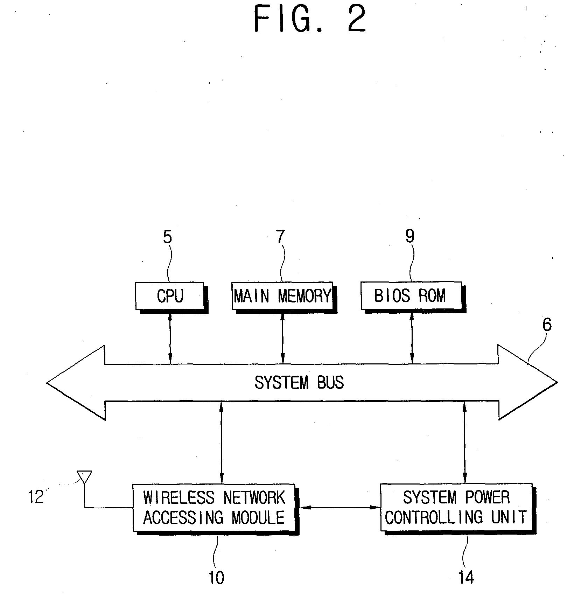

Referring to Figure 2, a portable computer 1 comprises a main body 3 and a display panel 2 coupled by a hinge to the main body 3 so this it can be pivoted open and closed.

Referring to Figure 2, a variety of system components, such as a central processing unit (CPU) 5, a main memory 7, a BIOS ROM 9, a system bus 6, a system power control unit 14, a wireless network accessing module 10 and so on, are housed in the main body 3.

Typically, the CPU 5, the main memory 7, the BIOS ROM 9, and the system bus 6 control operations of the computer system 1. In particular, the CPU 5 controls communication and processing of data using the system bus 6.

The system power control unit 14 supplies power to each component of the computer system 1 to drive them, according to a power selection signal supplied, for example, after power selection by the user. The system power control unit 14 can also manage power supply to the computer system 1, for example to provide power save modes.

The wireless network accessing module 10 transmits and receives signals via a extendable and retractable antenna 12, thereby enabling the computer system 1 to access a wireless network (not shown). Typically, the antenna 12 of the wireless network access module 10 is installed so that it can be pulled out through an opening 4 provided in a side of the main body 3 to enhance receiving sensitivity. When the user tries to access a wireless network, the user pulls out the antenna 12 of the wireless network access module 10 through the opening 4 and extends it to enhance the reception and transmission performance. When the wireless network access module 10 is not being driven (i.e. it is disconnected from the network), the user can use the computer system 1 with the antenna 12 retracted into a storage space in the main body 3. Typically, the antenna 12 is small and telescopic so that it can be received inside the main body 3. Furthermore, the antenna 12 can be angled perpendicularly to axis of the opening 4, thereby further enhancing its performance.

Pulling out of the antenna 12 causes the wireless network accessible module 10 to output a signal which triggers running of a wireless access program by the CPU 5.

Pulling out of the antenna 12 when the computer system 1 is turned off or in a power save mode causes the wireless network access module 10 to supply a power supply signal or a power save release signal to the system power control unit 14 and thereafter output a signal triggering running of the wireless access program by the CPU 5. Accordingly, if the antenna 12 is drawn out when the system 1 is turned off or in the power save mode, the wireless network accessing program is executed after the computer system 1 is booted up. When the computer system 1 is in the power states of power-off or power-save, the system power controller 14 continues to supply power to the network access module 10, enabling the module 10 to detect the state of the antenna 12 and generate control signals for changing the power state of the computer system 1 to powered and triggering execution network access software for establishing a wireless network access via the module 10 using the antenna 12.

As shown in Figure 2, the wireless network access module 10, as a processing component of the computer system 1, is in communication with other processing components of the computer system 1, such as the main memory 7, BIOS ROM 9, the system power controller 14, etc. via the system bus 6 using known techniques. Furthermore, the network access module 10 can be directly in communication with a system power control unit 14 of the computer system 1.

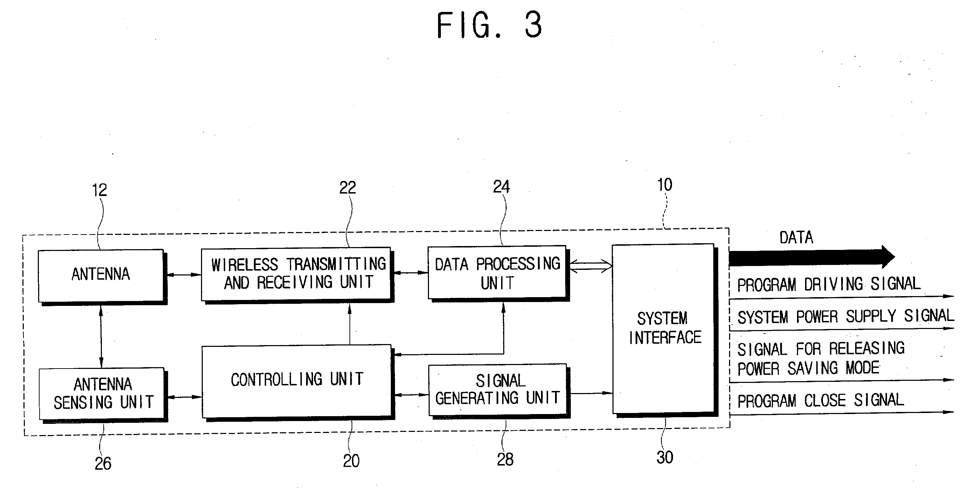

The configuration of the wireless network access module 10 shown in Figure 2 will now be described in more detail with reference to Figure 3.

Referring to Figure 3, the wireless network access module 10 comprises the antenna 12, a wireless transmitting and receiving unit 22, a data processing unit 24 for processing the data being transmitted and received, an antenna sensing unit 26 for sensing pulling out and retraction of the antenna 12, a signal generating unit 28 for generating control signals relative to (i.e., processed by) the computer system 1, a control unit 20 for controlling the units/components of the network access module 10 and a system interface 30 for interfacing the module 10 with the other processing components of the computer system 1 via the system bus 6.

The system interface 30 is an interface between the wireless network access module 10 and the rest of the computer system 1. Therefore, data from the computer system 1 can be transmitted by the wireless network access module 10. Also, the computer system 1 can be supplied with data received by the wireless network access module 10. If the network access module 10 is implemented as a card (i.e., a printed circuit board/expansion board that can be added to the computer system 1 to provide additional capabilities), the system interface 30 may employ a PCI (peripheral component interconnect) interface, a PCMCIA (personal computer memory card international association) interface, a USB (universal serial bus) interface, etc. according to known methods of interfacing peripherals with computer systems.

If the wireless network access module 10 is implemented on (i.e. integrated with) a system board of the computer system 1, it may be possible to obviate the system interface 30 and the module 10 may interface with the computer system 1 by directly exchanging data via the system bus 6.

The control unit 20 controls the wireless transmitting and receiving unit 22 and the data processing unit 24 to convert data input through the system interface 30 into a transmittable form for the network. The control unit 20 wirelessly transmits the converted data to the network through the wireless transmitting and receiving unit 22 and the antenna 12. Also, the control unit 20 processes data received from the network through the antenna 12, the wireless transmitting and receiving unit 22 and the data processing unit 24. The control unit 20 supplies the processed data from the network to the rest of the computer system 1.

The antenna sensing unit 26 senses pulling out and retraction of the antenna 12 and supplies a sensing result to the control unit 20. The control unit 20 controls the signal generating unit 28 to supply/generate system signals, such as a signal triggering a network accessing program, a system power supply signal, a signal for releasing power saving mode, a program close signal, etc. to the rest of the computer system 1 through the system interface 30.

If the antenna sensing unit 26 determines that the antenna 12 has been pulled out, the control unit 20 controls the signal generating unit 28 to output the signal triggering the network accessing program. The network accessing program triggering signal is transmitted to the system bus 6 and the CPU 5 through the system interface 30, and the CPU 5 responds by running the network accessing program.

If the control unit 20 determines that the computer system 1 is in a power saving mode when the antenna 12 is pulled out, the control unit 20 generates the signal releasing the power saving mode through the signal generating unit 28 and outputs the releasing signal to the system power control unit 14, by which the computer system 1 is switched to the normal mode and, thereafter, the controlling unit 20 outputs the network accessing program triggering signal to the computer system 1.

If the control unit 20 determines that the computer system 1 is turned off when the antenna 12 is pulled out, the control unit 20 first controls the signal generating unit 28 to output the system power supply signal to the system power control unit 14. The system power control unit 14 controls supply of power to circuitry of the computer system 1 in response to the system power supply signal from the wireless network access module 10 to boot up the computer system 1. When the computer system 1 has booted, the control unit 20 generates the signal triggering the network accessing program through the signal generating unit 28 and supplies the generated driving signal to the rest of the computer system 1, thereby causing the network accessing program to be executed.

As described above, the control unit 20 of the wireless network access module 10 enables a network accessing program to be executed automatically in response to control signals from the module 10, when the antenna 12 is pulled out, thereby enabling the user to access a wireless network immediately through the network accessing program after pulling out the antenna 12.

In the case that the system 1 cannot immediately execute the network accessing program because the computer system 1 is in the power saving mode or is turned off, the control unit 20 of the wireless network access module 10 first supplies a control signal appropriate for the state of the computer system 1 to switch the computer system 1 to its fully on state so that the network accessing program can then be run. Accordingly, in the power saving mode, the controlling unit 20 first supplies the signal, releasing the power saving mode, to the computer system 1. In the state that the computer system is turned off, the controlling unit 20 supplies the system power on signal to the computer system 1, switching the computer system 1 into its normal on state. Once the computer system 1 is in its normal on power state, the control unit 20 supplies the program triggering signal to start the network accessing program.

As described above, the wireless network access module 10 comprises an antenna 12 capable of being pulled out and pushed in, and some devices enabling access to a wireless network. The wireless network access module 10 may employ any known wireless protocols, such as a IEEE 802.11a or b, IS95 CDMA (code-division multiple access), Bluetooth, etc. Furthermore, the wireless network accessing program can vary depending on the type of the wireless network access module 10. For example, if the wireless network access module 10 is a wireless LAN card, the network accessing program may be a web browser. If the wireless network access module 10 is a CDMA communication module, the network accessing program may be a phone communication program.

The wireless network accessing program can be set up to try automatically to access a previously specified wireless network when the wireless network accessing program is executed. For example, in the case of the wireless network accessing program being a web browser, the wireless network access module 10 may try to access a specified web server as soon as the web browser is executed. In the case of the wireless network accessing program being phone communication program, the wireless network access module 10 may try to call a specified phone number. Thus, advantageously, a user can directly access the specified wireless network without any additional operations after the antenna 12 is pulled out and without any input commands to the computer system 1.

Furthermore, the control unit 20 can control the signal generating unit 28 to generate a program close signal for closing the wireless network accessing program when the antenna sensing unit 26 senses that the antenna 12 has been retracted into the main body 3. The program close signal generated by the signal generating unit 28 is transmitted to the CPU 5 through the system interface 30 and the system bus 6, and the CPU 5 terminates the wireless network accessing program in response to the program close signal. Thus, advantageously, a user can close the wireless network accessing program without any additional operations after the antenna 12 is retracted and without any input commands to the computer system 1.

In the above-described embodiment, the computer system 1 equipped with the wireless network access module 10 and the system power control unit 14, according to the present invention, has been exemplified by a portable computer 1. However, the present invention can be employed in other types of computer systems, such as PDAs, palm top computers, desktop computers, etc., so long as they can wirelessly access a network with an antenna 12 that the user moves between non-operational and operational positions.

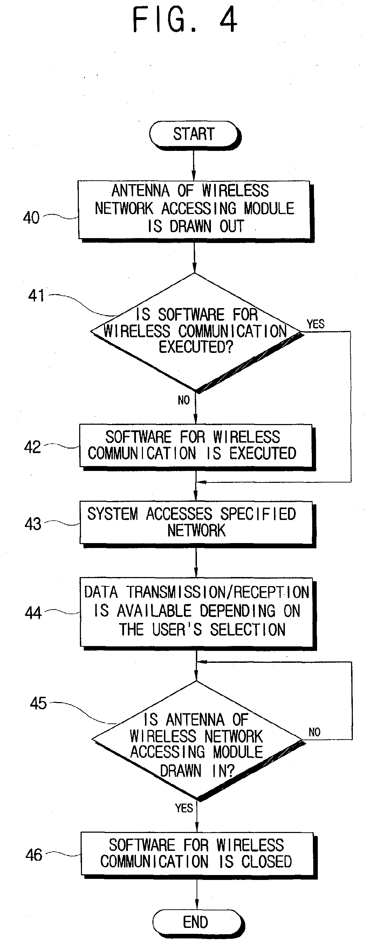

Referring to Figure 4, at operation 40, a user pulls out the antenna 12 of the wireless network access module 10 for wirelessly accessing a network and the control unit 20 of the wireless network access module 10 senses through the antenna sensing unit 12 whether the antenna 12 has been pulled out. If, at operation 40, it is sensed that the antenna 12 has been pulled out, the control unit 20 determines whether the network accessing program for wireless communication being executed (i.e., already running), at operation 41.

If, at operation 41, the network accessing program for wireless communication is not executing, the control unit 20 of the wireless network access module 10 supplies a signal for triggering the network access program through the signal generating unit 28. If, at operation 41, the triggering signal for the network accessing program is supplied by the controlling unit 20 through the signal generating unit 28 to the CPU 5, the CPU 5 commences execution of the network accessing program, at operation 42. If, at operation 41 or after operation 42, the network accessing program is executing, the user can wirelessly access a specified wireless network using the executing wireless network accessing program at operation 43, and data transmission and reception is performed, at operation 44. Thereafter, it is determined (by monitoring) whether the antenna 12 of the wireless network access module 10 is retracted by the user to disconnect the wireless network, at operation 45. In particular, at operation 45, the control unit 20 of the wireless network access module 10 senses that the antenna 12 has been retracted, using the antenna sensing unit 26 and, at operation 46, controls the signal generating unit 28 to generate a program close signal for closing the network accessing program, thereby disconnecting the wireless network.

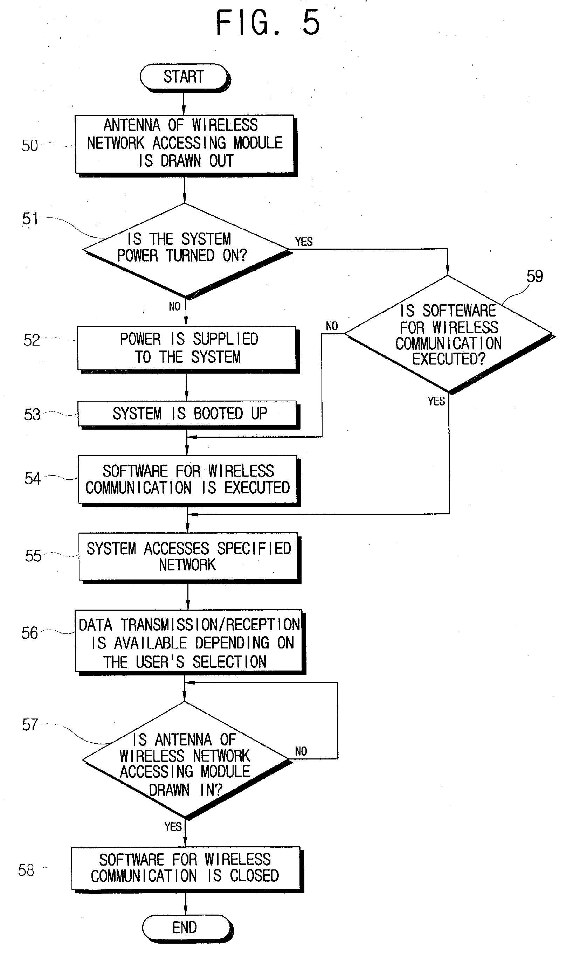

Referring to Figure 5, if, at operation 50, the antenna 12 of the wireless network access module 10 is pulled out by the user, the controlling unit 20 of the wireless network access module 10 senses through the antenna sensing unit 26 whether the antenna 12 is drawn out, and, at operation 51, determines whether the computer system 1 is turned on or off using the system power control unit 14.

If, at operation 51, the computer system 1 is turned on, at operation 59, the controlling unit 20 of the wireless network access module 10 determines whether the network accessing program for wireless communication is executing. If, at operation 59, the network accessing program is not executing, at operation 54, the controlling unit 10 supplies a signal driving the network accessing program to have the network accessing program executed. If, at operation 59, the network accessing program is executing, at operation 55, the computer system 1 can access a specified network.

If, at operation 51, the computer system 1 is turned off, at operation 52, the controlling unit 20 of the wireless network access module 10 first outputs a system power supply signal for power supply to the computer system 1 (for example, outputs a system power supply signal to the system power control unit 14). At operation 53, the computer system 1 is booted up, in response to the power supply. At operation 54, the controlling unit 20 supplies a signal for triggering the network accessing program. When the network accessing program is executed, at operation 55, the user can wirelessly access a specified network using the wireless network accessing program, and, at operation 56, data reception and transmission are performed. Thereafter, at operation 57, it is determined (by monitoring) whether the antenna 12 of the wireless network access module 10 is retracted by the user to disconnect the wireless network. More particularly, at operation 57, the control unit 20 of the wireless network access module 10 senses that the antenna 12 has been retracted using the antenna sensing unit 26 and, at operation 58, controls the signal generating unit 28 to generate a program close signal closing the network accessing program, thereby disconnecting the wireless network.

The control flow as described above in Figure 5 can be applied in the same manner if the computer system is in a power saving mode in which the network accessing program cannot be immediately executed by the computer system 1. If the computer system 1 is in the power saving mode, operation 51 determines whether the computer system 1 is in the power saving mode. Furthermore, at operation 52, the controlling unit 20 would supply a signal releasing the power saving mode to the computer system 1 (for example, outputs the release signal, directly, or indirectly via the bus 6, to the system power control unit 14). Furthermore, at operation 53, power management of the computer system 1 would be converted from the power saving mode into the normal mode.

Accordingly, if the computer system 1 is in a state that the network accessing program cannot be executed immediately, the controlling unit 20 of the wireless network access module 10 first supplies a signal corresponding to the state of the system 1 (i.e. switching the computer system 1 into the normal fully on state) in which the network accessing program can be executed and, thereafter, causing the network accessing program to be executed.

As described above, there is provided a computer system having an antenna capable of being pulled out and retracted, enabling wireless access and network disconnection. In this computer system, if the antenna is drawn out, the network accessing program is automatically executed. If the network accessing program cannot be immediately executed, the computer system is switched into its normal fully on state and, thereafter, the network accessing program is automatically executed. Accordingly, the user can access the wireless network without any additional operations after the antenna is pulled out and without any input commands. Furthermore, if the antenna is retracted, the wireless network accessing program is automatically closed. Accordingly, the user can close the wireless network accessing program without any additional operations after the antenna is retracted and without any input commands to the computer system. Therefore, there is provided a computer system which can access a wireless network and disconnect from a wireless network in an easy manner, simply by the pulling out and retraction of an antenna, and a method of controlling the computer system.

More particularly, the computer system has an antenna capable of being pulled out and pushed in and in which these operations trigger automatic network connection and disconnection. The present invention provides automatically wirelessly accessing and disconnecting from a wireless network by a computer system, thereby receiving and transmitting data to/from the computer system over the wireless network, in one of system power states of powered, power-save and powered-off, by sensing whether the antenna is drawn out or retracted. If the antenna is drawn out, the system is converted into the powered state, if the system is in one of the power states of power-save and powered-off, and the system executes a network accessing program wirelessly accessing the network. Conversely, if the antenna is retracted, the system automatically closes (exits) the network accessing program, disconnecting the wireless network.

The processes of the present invention as embodied in the wireless network module 10 and the system power control unit 14 can be implemented in software and/or hardware. Furthermore, although the example embodiment uses a drawable/extendable and retractable antenna, the present invention is not limited to such configuration. The extendable and retractable antenna can be any wireless signal sensor (e.g., radio, light wave) or device radiating and receiving radio/light waves (i.e., for transmitting and receiving wireless signals) that can accommodate sensing of an on/off (operating) state of the device. For example, a snap in/out type, switchable, or fastened type device can be used in the invention or any device that allows sensing of a state of electrical contact/no electrical contact to the device can be used.

## Claims

1. A computer apparatus including a processor (5), a memory (7) storing a networking program, a wireless networking interface (10) and an antenna (12) movable between a stowed position and an operational position, **characterised by** means (20, 26, 28) for detecting the position of the antenna (12) and outputting an antenna operational signal when the antenna (12) is moved to said operational position and the processor (5) being responsive to said antenna operational signal to run said networking program.

2. A computer apparatus according to claim 1, wherein the means (20, 26, 28) for detecting the position of the antenna (12) is configured for outputting an antenna stowed signal when the antenna (12) is moved to said stowed position and the processor (5) being responsive to said antenna stowed signal to terminal said networking program.

3. A computer apparatus according to claim 1 or 2, including a body (3), wherein the antenna (12) is retractable into said body 3 to said stowed position.

4. A computer apparatus according to claim 3, wherein the antenna (12) is hingedly coupled to said body (3).

5. A computer apparatus according to any preceding, wherein the antenna (12) is telescopic.

6. A computer apparatus according to any preceding claim, including power management means (14), wherein the power management means is responsive to said antenna operational signal to switch the apparatus into a fully on state in the event that it is not in said fully on state.

7. A computer apparatus according to any preceding claim, wherein the networking program is a user space application program.

8. A method controlling a computer system having a retractable antenna to access a wireless network to wirelessly receive and transmit data of the system, comprising:
sensing whether the antenna is drawn out; and
executing a network accessing program accessing the network, if sensed that the antenna is drawn.

9. The method according to claim 8, further comprising:
determining whether the system is in a power saving mode, if sensed that the antenna is drawn out;
converting the system to a normal mode, if determined that the system is in the power saving mode; and
executing the network accessing program when the system is converted into the normal mode.

10. The method according to claim 8, further comprising:
determining whether the system is turned off, if sensed that the antenna is drawn out;
supplying power to the system, if determined that the system is turned off; booting up the system in response to the power supply to the system; and
executing the network accessing program after the booting is completed.

11. The method according to claim 8, wherein the executing of the network accessing program comprises accessing a previously specified wireless network.

12. The method according to claim 8, further comprising:
sensing whether the antenna is drawn in; and
closing the executing network accessing program accessing the network, if sensed that the antenna is drawn in.

13. A computer system having a retractable antenna to access a wireless network to wirelessly receive and transmit data of the system, comprising:
an antenna sensing unit sensing drawing and retracting of the antenna;
a system signal generating unit generating a system control signal controlling the system; and
a controlling unit controlling the system signal generating unit to output a driving signal to a network accessing program accessing the network, if the antenna sensing unit senses that the antenna is drawn out.

14. The computer system according to claim 13, wherein the controlling unit controls the system signal generating unit to output the driving signal to the network accessing program after a power saving mode releasing signal is output, if sensed that the antenna is drawn while the system is in the power saving mode.

15. The computer system according to claim 13, further comprising a system power controlling unit supplying a driving power to the system;
wherein the controlling unit controls the system signal generating unit to output the driving signal to the network accessing program, after the driving power is supplied to the system by supplying a system power supply signal to the system power controlling unit through the system signal generating unit, if sensed that the antenna is drawn while the system is turned off.

16. The computer system according to claim 13, wherein the network accessing program accesses a previously specified wireless network.

17. The computer system according to claim 13, wherein the controlling unit controls the signal generating unit to generate a program close signal closing the network accessing program, if sensed that the antenna is drawn in.

18. A method of controlling wireless network access and disconnect of a computer, comprising extending and retracting an antenna to automatically wirelessly connect and disconnect, respectively, to the network in one of computer power states of powered, power-save and powered-off.

19. A wireless network controller to wirelessly access a network and in communication with a computer having a power manager, the controller comprising:
a wireless signal sensor;
a detector detecting an operating state of the sensor; and
a programmed computer processor determining a power state of the computer in response to a detected operating state of the sensor, determining execution status of network access software in the computer, generating control signals to the power manager of the computer to start the network access software in response to the power state of the computer and the execution status of the network access software, and controlling wireless data communication between the network and the executing network access software.

20. The controller of claim 19, wherein the detector detects a non-operating state of the sensor and the programmed computer processor generates a network access software close signal to disconnect from the network.

21. A computer system, comprising:
a wireless network controller comprising a wireless signal sensor and a programmed computer processor generating control signals in one of computer power states of powered, power-save and power-off to automatically execute a network access software to establish a wireless network access, in response to an operating state of the wireless signal sensor.

22. The computer system of claim 21, further comprising:
a power manager supplying power to the wireless network controller in the computer power states of power-save and power-off,
wherein the power manager converts the computer system into the powered state by supplying power to the computer system in the power states of power-save or power-off in response to one of the control signals and the powered computer system executes the network access software in response to another of the control signals.

23. A computer system, comprising:
sensing means for sensing wireless signals;
detecting means for detecting an operating state of the sensing means;
control signal generating means for generating signals to automatically execute a network access software in response to the operating state of the sensing means; and
wireless network protocol means for wirelessly exchanging data between a wireless network and the computer via the sensing means.

24. The computer system of claim 23, wherein the detecting means further detects a non-operating state of the sensing means and the control signal generating means generates a network access software close signal to disconnect the wireless network.

25. A network access controller in a computer, the controller comprising:
a wireless signal sensor; and
a programmed computer processor detecting an operating state of the sensor, generating control signals in one of the computer power states of powered, power-save and power-off to automatically execute a network access software to establish a wireless network access, in response to the detected operating state of the sensor.

26. The controller of claim 25, wherein the programmed computer processor further detects a non-operating state of the sensor, and generates a network access software close signal to disconnect the wireless network.
